# EUROPEAN PATENT APPLICATION

(11) **EP 3 681 058 A1**
(43) Date of publication of application: **15.07.2020**
(21) Application number: 18209977.0
(22) Date of filing: 08.01.2019
(51) Int. Cl.: H04B 17/27, H04W 4/029

(54) **METHOD OF DEVICE LOCATION IDENTIFICATION USING SIGNALS WITH VARIABLE SIGNAL STRENGTH**

(71) Applicant: Linde GmbH, 82049 Pullach (DE)
(72) Inventor: Jacobsen, Brian, SW12 9RF London, 47 Old Devonshi (GB); Reid, Dennis, West Sussex, Pulborough/RH20 (GB); Thind, Mandip, London, UB2 5RS (GB)
(74) Representative: Gellner, Bernd

(57) **Abstract**

The present invention pertains to method and corresponding system for localizing a device (10; 10A, 10B), in particular a device for a medical application, in a wireless network configured for a plurality of devices, comprising the steps of wirelessly transmitting a signal from the device (S100), receiving the signal (S120) by at least one receiver in communication with a monitoring unit, and determining the location of the device (S140) based on the received signal and the receiver using the monitoring unit, wherein the signal is transmitted with more than one transmission power (S110). Furthermore, the present invention pertains to a device having a corresponding configuration for use in such method and system.

## Description

### Technical Field

The invention relates to a method for localizing a device, in particular a device for a medical application, in a wireless network configured for a plurality of devices and a corresponding system as well as a device for use in such wireless network.

### Technological Background

Institutions, larger buildings, and industrial facilities generally comprise a large amount of devices and appliances that are commonly distributed over a large number of rooms and floors and may be used by or allocated to a specific user. Such devices may be actively used, be in idle mode, or may have been used and may accordingly be required to be processed further.

In particular, in medical institutions or facilities many different devices are used for medical applications and therapies, for example, in the form of stand-alone, mobile, and/or stationary hardware to perform medical treatments or as disposables that may be required for such hardware or may be used independently. In general, a plurality of similar medical devices is provided in medical facilities, which are often located at different locations. For example, the devices may be located at different positions to provide medical treatment for a number of patients or may be stored in e.g. a central storage room prior to the respective medical treatment. Accordingly, to ensure availability of a respective device for a medical treatment, medical institutions commonly register a last known location of each device in corresponding lists or in a database. However, this requires that for each device a respective location is to be manually input and accordingly updated.

Furthermore, each device may have a different status, for example, a different room or patient allocation, a used or unused status, and/or a status indicating a risk of infection due to exposure to a specific patient, etc. In particular, for hardware devices, it may be necessary to know the actual number of operating hours while at the same time the required set up is generally relevant for a specific medical treatment. Accordingly, it is preferred that a required cleaning, disinfection, assembly and/or disassembly of corresponding disposables, and/or maintenance of the respective device is indicated. However, this results in an even more elaborate updating in already complex registration methods for devices.

In addition, it is preferred that not only the availability of each device is known, but also the respective type and corresponding application range. In particular, medical institutions providing medical gas applications to patients rely on the availability of the respective medical gases to provide the required inhalable medicament. Such medical gases are commonly provided by large gas cylinders or tanks, which are either stored at one or more locations to distribute and provide the medical gas at multiple wards or are provided in gas cylinders to be used for one or more patients and which may be stored e.g. in a central storage as stock keeping units or SKU. Accordingly, in addition to the mere availability and location of the gas cylinder, it is preferred that both the gaseous mixture comprised within the respective gas cylinder and the corresponding fill-level, i.e. the gaseous pressure, are known to ensure sufficient availability. Such information is generally not available or only estimated in current databases relying on manual inputs.

The manual input of device locations and further characteristics furthermore generally comes with a delay as the updating of the respective device may not be instantly provided, but generally occurs at a later stage. Accordingly, a database lacking updated or actual information may provide device locations that are no longer valid, such that the availability of said device may not correspond to the database entry and/or the device needs to be located individually and manually. The manual inputting also bears the risk of a device being lost, for example, when a location update is not provided at all. In particular in medical institutions, knowing the ad hoc availability of such devices is important to provide sufficient resources required for a therapeutic application. Accordingly, such delayed and potentially inconsistent database entries are undesirable.

An alternative approach is to localize the devices within a facility by implementing a localization using a wireless network. Such localization is based on the transmission of a signal from a respective device and by determining the location of such device based on the received signal by a receiver. With the introduction of low power transmission technologies such as Bluetooth Low Energy (BLE) considerable effort has been made in establishing methods to track the location of assets at a given site. Bluetooth-based location tracking is generally achieved in two main ways, namely proximity sensing or by implementing a fingerprinting technique.

The first technique, proximity sensing, relies on using a fixed (or mobile) receiver, which is configured to detect a transmitted signal, e.g. an advertisement packet, from a device. The location of said device is then assigned to the location of the receiver. By monitoring the measured signal strength, e.g. RSSI, the system can also optionally determine whether the device is merely in range of or is close to, i.e. in proximity of, a receiver. Accordingly, the location may only be determined or estimated when a device is within a particular range.

The second technique, fingerprinting, relies on multiple receivers being installed at predefined or fixed locations within a space or site. The signal or advertisement from the device may then be detected by multiple receivers and with varying signal strengths. Accordingly, a specific or 'unique' fingerprint is then assigned to or determined for the device based on the detected RSSI for each of the receivers to estimate the location of the device.

Although both techniques reduce the need for manual inputting and provide a more automated approach, the problem with these approaches is that that the static signal strength emitted by the device is often subject to interference, which means knowing the exact or assigned location of the emitting device can be difficult to determine. This is furthermore increasingly difficult with increasing complexity and density of such a system with multiple receivers and devices.

Similarly, if the transmission power is kept constantly high it could be difficult to distinguish the exact location since the signal or advertisement packet will be detected by multiple receivers and/or a receiver configured for proximity sensing would detect devices that are not in near range. In addition, this increases the probability of error in a signal that could e.g. bounce from multiple surfaces before it is eventually received. Furthermore, by implementing a high transmission power the power consumption of the device will also be high, which is undesirable for mobile and/or battery powered devices.

Furthermore, a constant high transmission power and corresponding signal may increase the radiation exposure for a patient, which may be particularly detrimental for a patient with a critical medical condition and/or with medical assist devices, e.g. a pacemaker. By the same token, a strong signal may cause interference with delicate electronical devices, e.g. monitoring devices for cardiovascular parameters on intensive care units or medical imaging instrumentation.

At the same time, however, a constant low transmission power may not be advantageous since this significantly reduces or limits the range of the device, such that only few devices may be tracked at any one point in time by a particular receiver, thereby making e.g. a fingerprinting technique less effective and which hence does not provide a sufficient or desirable localization.

### Summary of the invention

Accordingly, it is an object of the present invention to provide an improved and more efficient localization of devices in a wireless network.

Said object is achieved in a first aspect by a method for localizing a device in a wireless network configured for a plurality of devices, comprising the steps of wirelessly transmitting a signal from the device, receiving the signal by at least one receiver in communication with a monitoring unit, and determining the location of the device based on the received signal and the receiver using the monitoring unit. According to the invention, the signal is transmitted with more than one transmission power.
The signal transmission with more than one transmission power has the advantage that the signal transmitted by a device may be selectively received by one or more receivers. For example, the device may transmit the signal with a first transmission power that allows a wider transmission range to ensure that the signal may be received by a receiver or by more than one receiver while at the same time the device may transmit the signal with a second transmission power that provides a more limited range, such that the signal may e.g. only be received when the device is in proximity of a respective receiver or is only received by one or more receivers selected from a plurality of receivers. The detected signal strength may hence be associated with the different transmission powers, i.e. wherein the higher signal strength, e.g. when all signals are received by a respective receiver or when only a number of signals of a predefined total number of signals are received by a respective receiver, may be assigned to a higher transmission power of the signal and the lower signal strength may be assigned to a lower transmission power of the signal for said receiver. Accordingly, the various transmission powers provide that the localization of the device may be more accurate and is provided with higher reliability while at the same time the energy consumption may be reduced. The determined location may be reported or displayed, e.g. on the monitoring unit, or may be used otherwise, e.g. to acknowledge or validate a particular location.

Preferably, the signal is transmitted with more than two transmission powers. Although the provision of two different transmission powers already increases the efficiency of the device localization, the provision of more than two, e.g. three, transmission powers provides an even more refined localization of the respective device and a higher adaptability for more complex systems, i.e. a system having a large number of devices and receivers within the same wireless network. In particular, the signal may be transmitted with a low, medium, and/or high transmission power, e.g. up to 20 percent, about 50 percent, and about 80 to 100 percent of the available transmission power, respectively.

Preferably, each signal comprises an information relating to the respective transmission power and/or an indication of the respective signal number. For example, the signal may comprise an information in a header adapted to a respective communication protocol of the wireless network indicating that the signal has been transmitted with a low or high transmission power and/or that the signal has been transmitted according to a particular transmission mode, e.g. according to a predefined transmission pattern. This has the advantage that the received signal may be classified or assigned according to the respective transmission power, such that the provided information further facilitates the localization accuracy of the device. By the same token, an indication of the respective signal number out of a total number allows a further classification and allows determining which signal numbers are received at a respective receiver.

For example, the signal strength of the received signal may be compared with the provided information, such that e.g. a signal received with high signal strength and transmitted with a low transmission power, e.g. indicated by a respective flag or header in the signal, may indicate that the device is in proximity of the respective receiver.
By the same token, if the transmit power is set to high, which may be indicated by a different respective flag or header in the signal, then its transmission range will be increased and any receivers that are within range of the device will detect the device. When such a signal is received with low signal strength, this may indicate that the device is located at a distance from the respective receiver. Hence, by evaluating both the signal strength and the indicated transmission power the localization is significantly facilitated and the number of detected false positives is significantly reduced.

Furthermore, the provision of a third transmission power, e.g. a mid transmission power between the low and high powers, which may be indicated by a different respective flag or header in the signal, may result in either less receivers detecting the transmitted signal or the detection of the transmitted signal by a plurality or all of the receivers yet with a lower RSSI, such that the determining or assigning of the localization is also further facilitated and may be provided with an increased accuracy.

The transmission power may furthermore be provided as a discrete or dynamic transmission power. For example, the device may transmit the signal with predefined transmission powers that are either defined by the device or are predefined by the system or wireless network. In other words, the device may be configured to transmit the signal according to a fixed transmission power value. Alternatively, the device may provide the transmission power dynamically, such that the device may transmit the signal e.g. according within a predefined transmission power range, yet with a variable transmission power value. For example, the transmission power range may vary between specific types of devices, wherein a device may transmit a plurality of signals within the respective transmission power range. Furthermore, the difference between the respective transmission powers may be a reference for the specific type of the originating device.

The above localization based on variable transmission powers is generally applicable to any device comprised within a wireless network and configured to wirelessly transmit signals. This is particularly advantageous for devices used in medical institutions or facilities, which may be allocated to different rooms and/or different patients and wherein generally a large number of devices for medical applications are present and required for various therapeutic objectives. Accordingly, the device is preferably a device for a medical application. For example, the device may be configured as a medical treatment device to provide the medical treatment or may be configured as a module or sub arrangement required to set up the medical treatment device.

Accordingly, the device may be configured as a mobile or stationary device and may be configured to support a medical treatment or function as a stand-alone device. Alternatively, the device may be configured as a consumable, for example, a disposable that may be used to support a medical application, may provide a medical treatment on itself, or generally may be configured as a patient device.

Furthermore, the device may also be provided as a wearable or handheld device, e.g., a wrist watch, a smart phone, a tablet, a PDA, or keychain, which is associated to a particular patient. Accordingly, the provided method for localizing a device may at least indirectly provide a localization of the respective patient.

When configured as a hardware component for a medical application, the device may generally be any suitable medical treatment device. Preferably, the medical device is configured as a medical gas application device, which may be used to provide an inhalable medicament to a patient. For example, the medical gas application device may be configured to treat various respiratory disorders or provide assistance or alleviation of symptoms for patients suffering from e.g. cardiovascular or pneumatic malfunctions or insufficiency, but may also provide assistance for e.g. newborn infants. Configured as a modular and/or disposable device, the device may accordingly be configured as a source of a medical gas. For example, the device may be configured as a gas cylinder comprising a pressurized medical gas to be used in a medical treatment, in particular with a medical gas application device. Such a gas cylinder may comprise various dimensions and may e.g. have a fill volume in the range between 1 to 10 liters of water, in particular 5 or 10 liters.

Furthermore, the monitoring unit may also be comprised within a hardware or medical application device. For example, a medical gas application device may itself require various modules and/or disposables, i.e. a medical gas cylinder, and may accordingly initiate a localization of the respective device to facilitate a set up of the medical application device. Accordingly, medical personnel operating the medical application device may initiate the monitoring unit, such that signals transmitted by e.g. a medical gas cylinder and or patient may be received and a corresponding location thereof may be determined.

Irrespective of the particular configuration of the device, the device at least comprises a transmitter or transceiver to emit or transmit the signal with varying transmission power and to enable a localization of said device. Accordingly, a location of the particular device may be determined, such that information as to availability, a maintenance status, and/or cleaning status of the respective device or device type may be provided. To transmit and receive the respective signal in order to determine the location of the device, the wireless network may be adapted to a number of communication protocols and hence may have various configurations. For example, at least the device and the at least one receiver may be configured for wireless communication, i.e. the transmission, reception, and evaluation of respective signals, based on Bluetooth, Bluetooth Low Emission, Wi-Fi, WLAN, RFID, and/or NFC. Preferably, the device is adapted to communicate via Bluetooth Low Emission or BLE, such that the power consumption is kept low.

The method hence has the advantage that it may be implemented in existing systems without requiring the implementation of additional hardware, such that the method may be implemented in a cost efficient manner. Furthermore, by improving the location accuracy of the respective device, the quality of data leads to improved reliability, such that a more accurate availability assessment is provided, thereby further improving logistics operations for that device.

Preferably, the signal is transmitted as a plurality of packets with a respective transmission power, wherein the location of the device is preferably determined after a predefined amount of packets have been received.

For example, the device may transmit the signal as a plurality of data or advertisement packets that are communicated via at least one receiver in a wireless communication system, e.g. to a server or monitoring unit. The transmitted packets furthermore may be transmitted using the variable transmission power, such that e.g. a predefined amount of packets may be transmitted using a first transmission power and the remaining amount of packets are transmitted using a second transmission power, different from the first transmission power.

For example, the majority of the transmitted packets, e.g. about 90 percent, could be transmitted using e.g. mid-power transmissions (M), wherein a monitoring unit evaluates the received packets for all of the receivers and uses this information to make a first attempt in assigning the location of the device. This could be either provided by the above described proximity or fingerprint technique. To provide an improved accuracy of the remaining amount of transmitted packets, e.g. about 10 percent, are then transmitted using e.g. a low power (L) or a high power (H) transmission. Depending on the required accuracy level, the monitoring unit may then be configured to either report the determined location either after having received a first amount or percentage of transmitted packets or after all transmitted packets have been received.

Such configuration has the advantage that the accuracy of the device localization may be further increased. In other words, due to the transmission of packets with variable transmission power a fine-tuning of the localization may be provided, such that after a first estimation of the device location based on the majority of received packets with a first transmission power, the received packets transmitted with a second transmission power may provide more detailed information with respect to the location of the device. For example, when transmitting a lower amount of packets with low transmission power it is statistically more likely that such packets are only received by a respective receiver when they are in close proximity to the receiver. By the same token, transmitting a lower amount of packets with high transmission power increases the reliability by ensuring that also remote devices are detectable by a respective receiver.

At the same time, transmitting the majority of packets with a mid-range transmission increases the overall transmission range and ensures that the one or more devices may be tracked at any one point in time without significantly increasing the power consumption. Furthermore, this is advantageous in view of transmitting packets with a constantly high power transmission as this reduces the chance for error in a signal that could bounce from multiple surfaces before it eventually received and facilitates an accurate localization as the packets will generally not be received by the majority of receivers.

Preferably, the wireless network comprises multiple receivers, wherein the location is determined based on the respective transmission power of the received signals. In particular, the determining of the location may be based on proximity sensing or based on a fingerprinting technique of the received signals. In other words, the location may be assessed or determined based on an evaluation and/or statistical analysis resulting in a certain probability for a particular location of the device.

For example, multiple devices may receive a signal transmitted with a high transmission power while only a subset of devices may receive the signal transmitted with a low transmission power. Accordingly, those receivers that also receive the signal transmitted with a low transmission power are more likely to be in proximity range of the device, such that the potential location range may be further restricted.

By the same token, it may also be provided that a majority of receivers receives all transmitted signals, wherein the association of the signal strength with the respective transmission power allows a narrowing of the localization to one or more receivers and wherein the signal strength for these receivers may furthermore provide an indication of the proximity of the device to the respective receiver. Hence, the variable transmission power may be adapted to the number of receivers and, depending on the complexity of the wireless system, i.e. the number of devices and receivers, the required localization accuracy and device specificity.

To provide a further controllability of the localization and/or the respective device the monitoring unit may be configured to transmit an instruction signal to the device, wherein the device transmits the signal based on the received instruction signal. Preferably, the device transmits the signal by setting a power transmission modus corresponding to the instruction signal.

For example, the monitoring unit may be equipped with a transmitter or the receiver may be configured as a transceiver to emit the instruction signal to the respective device. By the same token, the device may comprise a receiver or the transmitter is configured as a transceiver, such that a bi-directional communication between the device and the monitoring unit or receiver is provided. The monitoring unit may e.g. receive one or more signals from a respective device, wherein the received signal strength or the number of received signals may not provide a desired localization accuracy. Accordingly, the monitoring unit may transmit the instruction signal, such that the device transmits one or more additional signals with different transmission power that facilitate the localization of said device. The instruction signal may hence ensure that a device transmits a signal according to a predefined communication protocol that is adapted and applied to every device and/or receiver in the wireless network.

Alternatively, the instruction signal may be an on-demand signal, i.e. only be transmitted when a received signal strength is insufficient to detect or localize the device. In either case, the instruction signal provides that both new and existing devices may be automatically configured to increase the localization accuracy within the wireless network.

To provide an even further controllability of the device, the instruction signal may also comprise a control function for said device. Accordingly, the monitoring unit preferably transmits a pairing signal to transmit data and/or control the device. For example, upon reception of a first signal, the monitor unit may transmit a pairing or challenging signal in order to initiate a pairing mode between the monitoring unit and the respective device. Said pairing signal may either be acknowledged or may automatically initiate a pairing between said devices. Accordingly, a communication channel may be provided between the device and the monitoring unit, i.e. when a user operating the monitoring unit requires additional information or data. For example, after a successful pairing attempt, the monitoring unit may be provided with actual patient information provided in a medical application device and may optionally send data to e.g. adjust settings of the respective device. By the same token, the monitoring unit may initially determine a nearest gas cylinder having a required medical gas and may retrieve additional information as to the fill level of said gas cylinder after a successful pairing request. Preferably, the signal comprises an information relating to a device identification, a device type, a device status, and/or a device allocation. For example, the signal may comprise a unique ID or specific MAC address or indicate a specific device name or owner of the device. Furthermore, the signal may provide information indicating potential applications of said device, e.g. indicate to be used for or as a particular treatment device, the type of disposable or consumable good, or a module to be used as a subset for a particular device, e.g. a type of gas cylinder. Alternatively, or in addition, the signal may also provide a current status which may indicate e.g. whether a device is currently in use or has been used, requires cleaning or disinfection, a total number of operating hours or a fill level, for example, a current gas fill percentage of a gas cylinder. In particular, the signal may also indicate whether a device is currently in or provided for a specific device, room, and/or patient.

In addition, the additional information provided by the signal may be used to search and/or select a particular device. Accordingly, the monitoring unit may be provided with e.g. a reservation protocol to reserve a particular device, e.g., for a particular patient or medical application. Furthermore, the information may provide that the monitoring unit may track a particular device, i.e. log particular uses and/or locations, e.g. to provide an appropriate maintenance or cleaning of said device according to corresponding prescriptions or protocol lists.

According to another aspect of the invention, a device is suggested, which is configured for use in a wireless network and comprises a transmitter for wirelessly transmitting a signal related to the device. According to the invention, the device is configured to transmit the signal with more than one transmission power.
Accordingly, the device may be any device as described in the above and suitable for a corresponding use with a method for localization of the device. Preferably, the device is device for a medical application, e.g. a medical gas application device or a medical gas cylinder.

By providing a configuration of the device to transmit the signal with more than one transmission power, the localization of said device may be improved, as described in the above. In particular, not only may the range of detection be varied by adapting the transmission power, the corresponding variable signal strength detected by receivers that are not at equal distance to the device also provides that the detected signal strength may be associated with the respective transmission power. For example, a higher signal strength may be assigned to a higher transmission power of the signal and the lower signal strength may be assigned to a lower transmission power of the signal for said receiver while at the same time the detection of e.g. a single signal indicates that said signal is more likely to have been sent by a higher transmission power, thereby providing a better indication of the distance of the device to the respective receiver. Accordingly, the various transmission powers provide that the localization of the device may be more accurate and is provided with higher reliability while at the same time the energy consumption may be reduced.

Preferably, the device is configured to transmit the signal with more than two transmission powers, preferably with a low, medium, and/or high transmission power, wherein the transmission power is preferably discrete or dynamic, wherein each signal preferably comprises an information relating to the respective transmission power and/or an indication of the respective signal number.

The provision of more than two transmission powers for the signal has the advantage that a first transmission power, e.g. a transmission power in the mid range, may be used as a standard to transmit a signal, wherein a second and third transmission power may provide a form of fine tuning for determining the location of the device. For example, the second transmission power may be in an upper transmission range to ensure that a more remote device may be better localized, in particular when said device is located in an area with a lower receiver density or with significant transmission interference, e.g. in a central storage room. By the same token, a third transmission power may be in a lower transmission range, such that the transmitted signal may only be received by one or more receivers out of a plurality of receivers and to narrow down the localization of the device. However, the provision of more than two transmission powers may not be required for every wireless network. For example, for a network comprising only few devices and a limited number of receivers, the provision of only two transmission powers may suffice to achieve a predefined localization accuracy whereas for large wireless networks with a large number of devices it may be required to provide three or more transmission powers, depending on the complexity of the system. Accordingly, the provision of more than two transmission powers is optional and may depend e.g. on the desired localization accuracy.

Preferably, the device is configured to transmit the signal as a plurality of packets with a respective transmission power. Accordingly, a predefined amount of packets may be transmitted with a first transmission power while the remaining amount of packets may be transmitted with a second or, if applicable, subsequent transmission power. For example, the device may be configured to transmit data by means of a plurality of packets, wherein e.g. 80 to 90 percent of the packets is transmitted with a mid-range transmission power and 10 to 20 percent of the packets is transmitted with a high-range transmission power, wherein e.g. the lower percentage or amount of packets comprises more essential data, e.g. medical treatment and/or patient data or e.g. an alarm or a maintenance or servicing request.

For further adaptability of the device to a particular wireless network or to provide better control of the configuration of the device, the device preferably comprises a receiver configured to receive an instruction signal, wherein the device is furthermore configured to transmit the signal based on the received instruction signal, preferably by setting a power transmission modus corresponding to the instruction signal.

Furthermore, the device may be configured to receive data and/or be controlled by an external monitoring unit upon a received pairing signal.

For example, the transmitter of the device may be configured as a transceiver, such that a bi-directional communication between the device and the monitoring unit or receiver is provided. Upon a request of a monitoring unit transmitted by means of the instruction signal, the device may transmit one or more additional signals with different transmission power that facilitate the localization of said device and hence provides a desired localization accuracy. The instruction signal may hence ensure that a device transmits a signal according to a predefined communication protocol that is adapted and applied to every device and/or receiver in the wireless network. Alternatively, the instruction signal may be an on-demand signal, i.e. only be transmitted when a received signal strength is insufficient to detect or localize the device. In either case, the instruction signal provides that both new and existing devices may be automatically configured to increase the localization accuracy within the wireless network.
To provide more details relating to the device, the signal preferably comprises an information relating to a device identification, a device type, a device status, and/or a device allocation. Accordingly, the device may provide information as to e.g. a particular treatment status or patient and may not only be localized, but also be particularly searched for and e.g. be selected or reserved by a monitoring unit in the wireless network.

According to a further aspect of the invention, a system for localizing a device, in particular a device for a medical application, in a wireless network configured for a plurality of devices is suggested, comprising at least one device as described in the above and configured to wirelessly transmit a signal from the device, at least one receiver for receiving a signal transmitted from a device, and a monitoring unit in communication with the receiver and configured to evaluate the received signal. According to the invention, the device is configured to transmit the signal with more than one transmission power, wherein the monitoring unit is configured to determine the location of the device based on the received signal.

Preferably, the monitoring unit of the system is configured to determine the location of the device based on an information relating to the respective transmission power and/or an indication of the respective signal number comprised in the received signal. For example, the device may transmit the signal as two signals with different transmission powers, wherein each signal provides an indication of the respective transmission power. Accordingly, the signal strength of the signals received by one or more receivers may be associated with the respective transmission power, such that e.g. a higher signal strength may be assigned to a higher transmission power of the signal and the lower signal strength may be assigned to a lower transmission power of the signal for said receiver while at the same time the detection of e.g. a single signal indicates that said signal is more likely to have been sent by a higher transmission power, thereby providing a better indication of the distance of the device to the respective receiver. Accordingly, the information or indication of the signal number facilitates the association and the evaluation of the signals to improve the localization by the monitoring unit.

Furthermore, the monitoring unit may be configured to evaluate the signal comprising a plurality of packets with a respective transmission power and to determine the location of the device after a predefined amount of packets have been received by the receiver. For example, the monitoring unit may evaluate data packets sent by a respective device, wherein the localization of said device may be provided after a predefined of packets have been received, e.g. 80 to 90 percent of the total packets sent. By the same token, the monitoring unit may be configured to determine the location of the respective device as soon as packets are available and either provides a continuous, periodic, or step-wise updating of the location, i.e. with increasing certainty and/or accuracy, or provides or reports the determined location only after all packets have been received.

In order to provide a sufficient localization in larger facilities and/or facilities with larger network complexity, e.g. covering larger areas and/or multiple rooms and comprising a large number of devices, potentially having a different device type, the wireless network of the system may be adapted. Accordingly, the system preferably comprises multiple receivers in the wireless network, wherein the monitoring unit is configured to determine the location based on the respective transmission power of the received signals, preferably based on proximity sensing or based on fingerprinting of the received signals. Accordingly the localization may be provided by means of evaluation and/or statistical analysis, wherein e.g. a location probability for a particular device may be provided.

### Brief description of the drawings

The present disclosure will be more readily appreciated by reference to the following detailed description when being considered in connection with the accompanying drawings in which:
Figure 1 is a schematic view of a method for localizing a device;
Figure 2 is a schematic view of a system for localizing a device in a wireless network;
Figure 3 is a schematic view of a system according to Figure 2, comprising a plurality of receivers and devices;
Figure 4 is an alternative embodiment of the system according to Figure 3;
Figure 5 is an alternative embodiment of the system according to Figures 3 and 4; and
Figure 6 is a schematic view of a system, wherein the monitoring unit is integrated in a device.

### Detailed description of preferred embodiments

In the following, the invention will be explained in more detail with reference to the accompanying figures. In the Figures, like elements are denoted by identical reference numerals and repeated description thereof may be omitted in order to avoid redundancies.

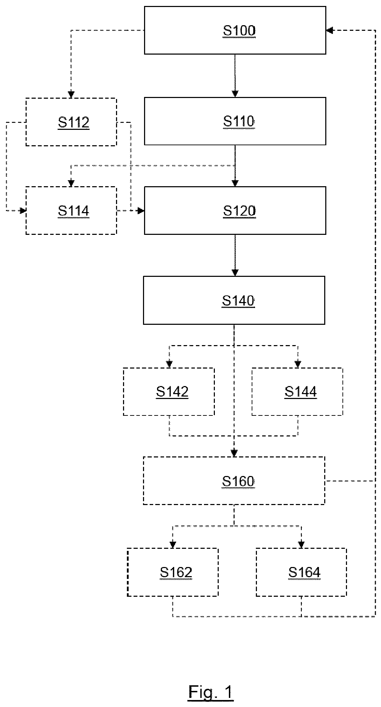

As depicted in Figure 1, a method for localizing a device is schematically provided comprising a plurality of steps, wherein the steps provided with dashed lines are optional and may be included in any combination as indicated by the connecting arrows.

The method may generally be applied to any device within a wireless network, and is preferably adapted to localize and/or track a device or asset for a medical application, such that the method may be of particular interest in medical institutions or facilities. In particular, the method may be applied to localize a medical gas application device or a corresponding gas cylinder or other gas source comprising or providing a medical gas to be used for a medical treatment for a particular patient.

Furthermore, the method may be implemented in a variety of wireless network configurations. In other words, the wireless network may be adapted to a number of communication protocols and technologies to transmit and receive signals, in particular in the form of data packets or packages. For example, devices and receivers may be configured for wireless communication, i.e. the transmission, reception, and evaluation of respective signals, based on Bluetooth, Bluetooth Low Emission, Wi-Fi, WLAN, RFID, and/or NFC. Preferably, the wireless network is adapted to provide communication via Bluetooth Low Emission or BLE, such that the power consumption is kept low and to reduce the radiation exposure and potential interference. Accordingly, in a first step, the method requires that a signal is wirelessly transmitted from a device, as indicated by step S100. The signal is transmitted with more than one transmission power, as indicated by step S110. Accordingly, the device is configured in at least one communication level in a communication protocol to transmit the signal according to a first and second transmission power, such that a corresponding receiver may receive two signals transmitted with different transmission powers. The respective transmission power may be provided according to a particular power mode that is specific for the particular device and/or may be predefined by the wireless network. The signal transmitted with different transmission powers may then be received by at least one receiver in the wireless network that is in communication with a monitoring unit, as indicated by step S120. For example, the wireless network may comprise more than one receiver, which are not at equal distance with respect to a particular device, such that the received or detected signal strengths of the respective transmitted signal may be different for each receiver and for a particular device. Each of the receivers may be in direct communication with the monitoring unit, for example, via a direct wireless or hardware link and may be configured as a stationary or mobile receiver that is allocated to a particular position within the wireless network. Accordingly, the position of each receiver is preferably known. Alternatively, the monitoring unit may be configured to define or determine the exact position of each receiver, either automatically or by means of a manual input after installment of the respective receiver. The communication between the receiver and the monitoring unit may be either provided continuously or periodically, depending on the required frequency to localize or track a particular device.

The received signal by the at least one receiver is then processed or evaluated by the monitoring unit, such that the location of the device may be determined based on both the received signal and the respective receiver, as indicated by step S140.
For example, if two signals having different signal strengths are received by a respective receiver, the monitoring unit may be facilitated in the localization of said device by associating the respective signal strengths with e.g. a respective higher and lower transmission power. Furthermore, if only one of said signals is received by another receiver, this may indicate that the device may be closer to the first receiver, wherein a more exact location of said device may be provided by the received signal transmitted with the lower transmission power. For example, the monitoring unit may correlate the signal strength with predefined signal strength values, wherein furthermore a difference between the first and second transmission power may be a reference for the corresponding type of device. Accordingly, the monitoring unit may determine the location of the device based on two signals transmitted with different transmission powers, wherein a determined location may be reported or displayed by the monitoring unit.

In more complex systems or wireless networks, i.e. wireless networks, comprising a plurality of receivers and with increased density of devices, the method may also optionally provide that the location is determined based on proximity sensing and/or based on fingerprinting of the received signals, as indicated by the steps S142 and S144, respectively. Accordingly, as outlined in the above, a proximity sensing may provide a fine-tuning of the localization by detecting or receiving signals from devices that are in a near range or in proximity of the respective receiver. Hence, by means of proximity sensing it is ensured that a signal is only provided when the device is within a predefined distance of the respective receiver. Furthermore, the provision of multiple transmission powers for the signal significantly increases the efficiency of the fingerprinting technique as the monitoring unit may evaluate and associate the received signal with a corresponding transmission power, such that by statistical analysis a higher accuracy of an assigned location may be provided.

To further increase the accuracy of the device localization, the method may optionally provide that the signal is transmitted with more than two transmission powers, as indicated by step S112. According to the embodiment, the signal is transmitted with three transmission powers, i.e. a low, medium, and high transmission power. Hence, at step S120 three corresponding signals may be received, which are associated with the respective transmission power by means of a corresponding indication provided in each of the signals. For example, each signal may comprise data or coded information, wherein a header of the respective signal comprises a signal number or other indication relating to the respective transmission power or transmission power mode. Accordingly, the monitoring unit reads the header and associates the signal strength with the corresponding transmission power and receiver.

The provision of various transmission powers has the advantage that, for example, a majority of receivers may receive the signal transmitted with medium or mid-transmission power whereas only one or a few receivers may receive the signal transmitted with a low transmission power. By the same token, the high transmission power ensures that the device may also be detected in more remote locations or locations with high signal interference. Accordingly, the monitoring unit may be provided with more detailed information, thereby providing device localization with increased accuracy. Although the embodiment is described with respect to three transmission powers in step S112, any number of transmission powers may be implemented depending on both the required localization accuracy and the system complexity, wherein instead of discrete transmission power values also dynamic values may be used, thereby further increasing the variability and the specificity of the device localization.

As indicated by step S114, the signal provided with various transmission powers, i.e. two or more transmission powers, as indicated by steps S110 and S112, respectively, may optionally be transmitted as a plurality of packets with a respective transmission power, wherein the location of the device is preferably determined after a predefined amount of packets have been received. Accordingly, the device may send data using the wireless network by means of a corresponding number of packets or advertisement packets, wherein the monitoring unit may either determine the location of the device after having received all packets of a series of packets or determines the location of the device continuously and with increasing accuracy upon receiving each subsequent packet. The determined location may then be provided or reported after all packets have been received or also be continuously reported, e.g. to track a particular device. To provide an even further controllability of the localization of the device or of the device itself, the monitoring unit may optionally be configured to transmit an instruction signal to the device, as indicated by step S160. Accordingly, the instruction signal may be provided directly to the device, e.g. by transmitting the signal via a nearest receiver configured as a transceiver or comprising a transmitter, such that the device transmits the signal according to a transmission power mode provided by the instruction signal. Furthermore, alternatively, or in addition, the monitoring unit may transmits a pairing signal to transmit data and/or control the device, as indicated by steps S162 and S164, respectively. Said signal may be part of or be independent of the instruction signal transmitted in step S160. Accordingly, the monitoring unit may transmit a pairing signal comprising a challenging information that is received by the device, e.g. by a receiver or transceiver of the device, and may initiate a pairing mode between the device and the monitoring unit, either upon reception or after acknowledgment, e.g. by means of a manual input at the device. Furthermore, the device may comprise a list or pairing history that allows a pairing mode to be automatically initiated upon the reception of a corresponding challenging information. Accordingly, no further authentication may be required. In pairing mode, the device may communicate with the monitoring unit via an established wireless communication channel, such that data may be transmitted from the device to the monitoring unit and vice versa.

By the same token, the challenging information or instruction signal may comprise a control signal, which allows a certain controllability or full control of the device after a corresponding pairing mode has been established. For example, medical personnel may require a controllability of a particular medical application device, e.g. a medical gas application device, to ensure that a medical treatment is applied according to a prescription and/or to maintain or achieve particular physiological parameters that are measured via a patient interface. Accordingly, a user or physician may e.g. initiate, resume, adapt, or terminate the current treatment by means of the control signal, optionally based on received data from the respective device.

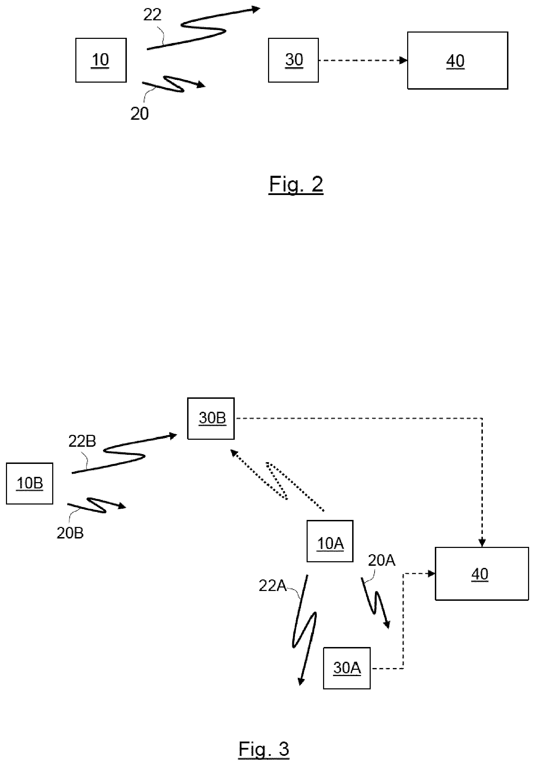

In Figure 2 a system for localizing a device 10 in a wireless network is schematically depicted. The device 10 is adapted to be used according to a method of localization as described in the above. Accordingly, the device is configured to wirelessly transmit a signal, e.g. a coded signal or data, within the wireless network via a respective transmitter, which is not shown in detail in Figure 2. The signal transmitted by the device 10 may be received by a receiver 30, which is in communication with a monitoring unit 40. The receiver 30 may be in direct communication with the monitoring unit via a respective communication link, as indicated by the dashed arrow. Although the communication is indicated by the arrow as a one-directional communication, a bi-directional communication between the monitoring unit 40 and the receiver 30 may also be provided, such that the monitoring unit 40 may communicate data to the receiver 30. Although the wireless network may be based on various communication technologies, the wireless network according to the embodiments in Figure 2 is based on Bluetooth Low Emission or BLE. However, alternatively, or in addition, the wireless network may also be based on RFID and/or NFC, i.e. radio frequency identification or near-field communication, to provide a level of automatic communication, in particular for devices that are within proximity of a particular receiver.

In order to determine the location of the device 10, the receiver 30 receives the signals transmitted by the device 10, wherein the monitoring unit 40 evaluates the received signals. The signal is transmitted by the device 10 as a signal with a first transmission power 20, and a signal with a second transmission power 22. Accordingly, the signal strength between the signal with the first transmission power 20, i.e. the first signal, and the signal with the second transmission power 22, i.e. the second signal, is different at the receiving end, i.e. at the receiver 30, as indicated by the different arrow size. Although this is merely optional, both the first signal 20 and the second signal 22, comprise an indication of the respective transmission power, e.g., in the header of the respective signal. Accordingly, the monitoring unit 40 evaluates the first signal 20 and the second signal 22 and associates the respective signal strength with the corresponding transmission power. Accordingly, the monitoring unit 40 is provided with detailed information in addition to the signal strength to facilitate the localization of the device 10. The determined or assigned location of the device 10 may then be reported or displayed or otherwise used by the monitoring unit 40, as outlined in the above. The embodiment according to Figure 3 generally resembles the system according to Figure 2, wherein the system comprises a plurality of receivers 30A, 30B and devices 10A, 10B. Each of the receivers 30A, 30B is in communication with a monitoring unit 40 and forwards or communicates the received signals for evaluation.

Each of the devices 10A, 10B respectively transmits the signal with a first transmission power 20A, 20B and a second transmission power 22A, 22B, wherein the first transmission power 20A, 20B is lower than the second transmission power 22A, 22B, as indicated by the different arrow sizes. Accordingly, the respective signal strength received at each of the receivers 30A, 30B may be different. As indicated in Figure 3, both the first signal 20A and the second signal 22A are received by the receiver 30A. In other words, the transmission power for both signals is sufficient for the receiver 30A to detect both signals with a corresponding signal strength. The device 10A is hence within range or in proximity of the receiver 30A.

As indicated by the dashed arrow, the signal transmitted with the second transmission power 22A is furthermore sufficiently strong to be detected by the second receiver 30B, whereas the signal transmitted with the first transmission power 20A is not. Accordingly, in order to determine the location of the device 10A, the monitoring unit 40 evaluates both signals 20A, 22A obtained or received from each of the receivers 30A, 30B and may hence determine that the device 10A is in proximity of the receiver 30A, yet is partially in range of the second receiver 30B. By means of the signal strength, in particular of the first signal 20A, the monitoring unit may then provide an accurate estimation of the exact distance between the device 10A and the receiver 30A.
By the same token, the device 10B transmits a first signal 20B and a second signal 22B. As indicated in Figure 3, the signal strength of the first signal 20B is not sufficient for the signal 20B to be received at the second receiver 30B while the second signal 22B is detected at the second receiver 30B. Accordingly, the monitoring unit 40 may determine that the second device 10B is at a distance yet within range of the second receiver 30B.. Furthermore, neither the first signal 20B nor the second signal 22B comprises sufficient signal strength for the signals to be received at the first receiver 30A. Accordingly, the monitoring unit 40 determines that the second device 10B is not within range of the first receiver 30A. Hence, the monitoring unit 40 may accordingly assign a location to the device 10B, which is at a given distance of the second receiver 30B and is not in proximity of the first receiver 30A. In addition, the monitoring unit 40 may determine a more exact range based on the detected signal strength of the second signal 22B, such that the location of the device 10B may be further narrowed down.

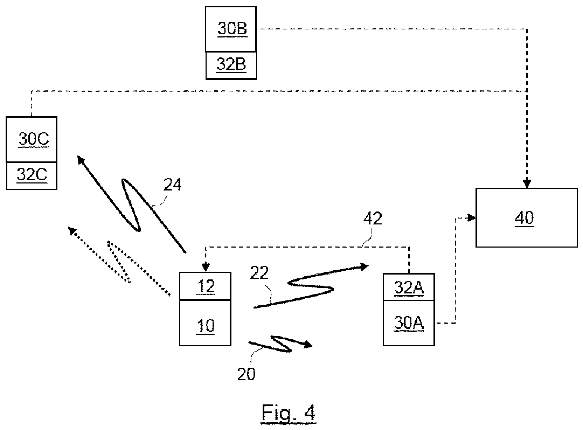

In Figure 4 only one device 10 out of the plurality of devices is shown within the wireless network of the system. Similar to the embodiment according to Figure 3, the device 10 transmits a signal with a first transmission power 20 and a signal with a second transmission power 22, i.e. a first signal 20 and a second signal 22, wherein the transmission power of the first signal 20 is lower compared to the second signal 22. Accordingly, the signal strength of both signals 20, 22 are different, as illustrated by the different arrow size. The signals 20, 22 are transmitted by means of a transceiver 12 of the device 10. This has the advantage that the device may both transmit and receive signals. Alternatively, the device 10 may also be provided with a separate transmitter and, optionally, a receiver.

In addition to the first receiver 30 a and the second receiver 30 B, the system furthermore comprises a third receiver 30C, wherein each of the receivers 30A, 30B, 30C comprises a respective transceiver 32A, 32B, 32C, such that each receiver 30A, 30B, 30C may both receive and transmit signals. As indicated by the arrows, the second signal 22 comprises sufficient signal strength to detect said signal 22 at the receiver 30A. However, the first signal 20 does not comprise sufficient signal strength to be received by the receiver 30A. Furthermore, neither the second receiver 30B nor the third receiver 30C are within range of the device 10, such that neither the first signal 20 nor the second signal 22 are detected by the second receiver 30B and the third receiver 30C, as indicated by the dashed line. Although the monitoring unit 40 may determine the location based on said information, i.e. the device 10 being located at a location that is at distance yet not within proximity of the first receiver 30A while at the same time not being in range of the second receiver 30B and the third receiver 30C, this may not provide sufficient accuracy in systems with larger complexity, e.g., comprising a higher density of both devices and receivers.

Accordingly, the monitoring unit 40 transmits an instruction signal 42 via the transceiver 32A to the device 10. Upon reception of the instruction signal 42 by the transceiver 12 of the device 10, the device 10 transmits a third signal with a third transmission power 24, which is larger than the second signal 22. The third signal 24 is then received by the third receiver 30C, but does not comprise sufficient signal strength to be received by the second receiver 30B. Accordingly, the monitoring unit 40 determines that the device 10 is located within a particular range with respect to the first receiver 30A, and within a particular range with respect to the third receiver 30C, depending on the signal strength of each signal at the respective receiver 30A, 30C. The exact location of the device 10 may then be determined based on e.g. an intersection of said ranges. Hence, the transmission of a third signal 24 further increases the accuracy of the device localization and furthermore provides that devices located at a more remote location may be better detected by a respective receiver.

Although Figure 4 depicts an embodiment, wherein the third signal 24 is transmitted upon reception of an instruction signal 42, the device 10 may also be configured to transmit more than two signals with a corresponding transmission power as per standard. The instruction signal 42 may then be provided to e.g. retransmit a particular signal and/or to transmit a further signal with a particular transmission power.

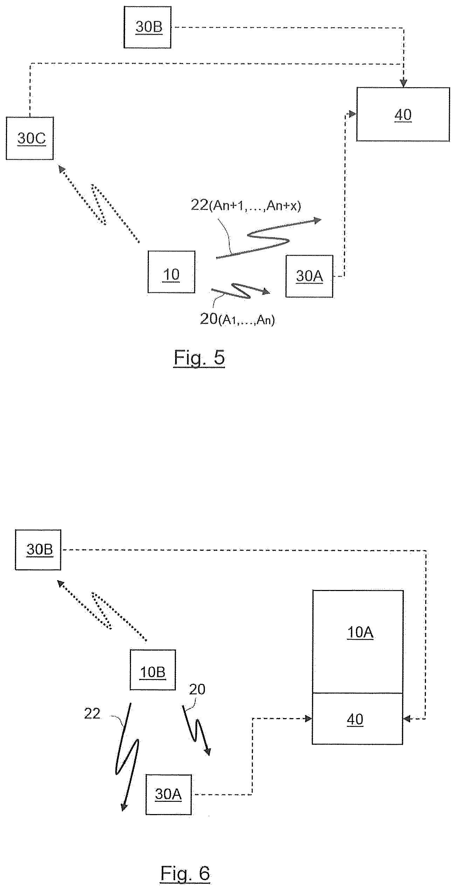

The embodiment according to Figure 5 generally resembles the embodiment according to Figure 4, wherein the details of the receiver and/or transmitter arrangement are not shown. In this embodiment, which is generally compatible with all other embodiments, the first signal 20 and the second signal 22 are transmitted as a plurality of packets, e.g. data packets or advertisement packets, which may be transmitted in predefined blocks or series. Accordingly, the first signal 20 and the second signal 22 comprise data, such that the monitoring unit 40 is provided with more information relating to the device 10. For example, the device 10 may be a medical application device, e.g. a medical gas application device, wherein information relating to a patient treatment may be transmitted. Furthermore, the data may provide an actual status of the device 10, for example, a total amount of operating hours, treatment time, or particular information related to a medical gas application, such as a breathing pattern or volume, a total amount of inhaled medical gas, and/or a current fill level of a medical gas source, e.g. a gas tank or cylinder.

Each of the packets may comprise a corresponding number, for example, in a header of each packet, such that the monitoring unit 40 is provided with an information relating to the total amount of packets to be received. Furthermore, as indicated by the arrows, a number of packets (A₁, ..., Aₙ) may be transmitted as a first signal 20 with a first transmission power, whereas the remaining number of packets (Aₙ₊₁, ..., Aₙ₊ₓ) may be transmitted with the second signal 22 with a second transmission power. This has the advantage that, for example, device data relating to a patient treatment may be transmitted with the first transmission power, such that said data may only be received by a particular receiver 30A. This not only ensures that sensitive data may be better protected, but also that the overall power consumption may be reduced as it is ensured that the data is received by the monitoring unit 40.

The remaining packets that are sent with the higher transmission power may then comprise less sensitive data, e.g., data relating to the type of device, a room allocation, a configuration for a particular medical treatment, and/or a cleaning or maintenance request. Accordingly, the monitoring unit 40 is provided with general information. Furthermore, transmitting the second set of packets with a higher transmission power results in an increased signal strength of said packets, such that the second signal 22 is not only received by the first receiver 30A, but also by the third receiver 30C, as indicated by the dashed arrow. Accordingly, the monitoring unit may determine or assess the location of said device 10, using the signal strength and associating said signal strength to the respective transmission power and receiver 30A, 30C, as described in the above.

In Figure 6 an embodiment of system is depicted, which is similar to the embodiment depicted in Figure 2, wherein the monitoring unit 40 is integrated in a first device 10A. For example, the first device may be a hardware component for a medical treatment, e.g. a medical treatment device, in particular, and medical gas application device. Having the monitoring unit 40 integrated in the device 10A has the advantage that a localization of a second device 10B may be initiated directly from the device to be used for a particular treatment. For example, the second device 10B may be a patient interface or disposable or may provide a source of a medical gas, e.g. a medical gas cylinder. Accordingly, during the setup of the device 10A or during treatment, a required module or supper arrangement may be localized by means of the monitoring unit 40. Said monitoring unit 40 may hence either be manually activated or be configured to periodically retrieve signals received at a respective receiver 30A, 30B in communication with the monitoring unit 40.

Upon initiation of the localization of the device 10B, the monitoring unit 40, as indicated in Figure 6, determines that the second device 10 B is in proximity of the first receiver 30A and within range, yet not in proximity of the second receiver 30B. Accordingly, the monitoring unit 40 may assess the exact location of the device 10B by associating the received signal strength with the respective receiver 30A, 30B. For example, the determined location may indicate a particular room or storage room and/or may furthermore indicate whether a particular cleaning protocol or servicing is required. Furthermore, it may be provided that the monitoring unit 40 is in communication with a central server or database, such that a reservation logic or protocol may be implemented in order to reserve or use the second device 10B, e.g. for a particular application or patient. Accordingly, by providing the assigned location and further information, the logistics efficiency and availability accuracy are significantly improved. It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

### List of reference numerals

- 10: Device
- 10A: First device
- 10B: Second device
- 12: Transceiver
- 20: Signal with first transmission power
- 20A: Signal with first transmission power
- 20B: Signal with first transmission power
- 22: Signal with second transmission power
- 22A: Signal with second transmission power
- 22B: Signal with second transmission power
- 24: Signal with third transmission power
- 30: Receiver
- 30A: First receiver
- 30B: Second receiver
- 30C: Third receiver
- 32A: First transceiver
- 32B: Second transceiver
- 32C: Third transceiver
- 40: Monitoring unit
- 42: Instruction signal
- S100: Signal transmission
- S110: Signal transmission with more than one transmission power
- S112: Signal transmission with more than two transmission powers
- S114: Transmission of signal as packets
- S120: Receiving signals
- S140: Determining device location
- S142: Proximity sensing
- S144: Fingerprinting
- S160: Transmit instruction signal
- S162: Transmit data
- S164: Device control

## Claims

1. Method for localizing a device, in particular a device for a medical application, in a wireless network configured for a plurality of devices, comprising the steps of:
- wirelessly transmitting a signal from the device (S100);
- receiving the signal by at least one receiver (S120) in communication with a monitoring unit; and
- determining the location of the device (S140) based on the received signal and the receiver using the monitoring unit,
**characterized in that**
the signal is transmitted with more than one transmission power (S110).

2. Method according to claim 1, **characterized in that** the signal is transmitted with more than two transmission powers (S112), preferably with a low, medium, and/or high transmission power, wherein the transmission power is preferably discrete or dynamic, wherein each signal preferably comprises an information relating to the respective transmission power and/or an indication of the respective signal number.

3. Method according to claim 1 or 2, **characterized in that** the signal is transmitted as a plurality of packets (S114) with a respective transmission power, wherein the location of the device is preferably determined after a predefined amount of packets have been received.

4. Method according to any of the preceding claims, **characterized in that** the wireless network comprises multiple receivers, wherein the location is determined based on the respective transmission power of the received signals, preferably based on proximity sensing (S142) or based on fingerprinting (S144) of the received signals.

5. Method according to any of the preceding claims, **characterized in that** the monitoring unit transmits an instruction signal (S160) to the device, wherein the device transmits the signal based on the received instruction signal, preferably by setting a power transmission modus corresponding to the instruction signal, wherein the monitoring unit preferably transmits a pairing signal to transmit data (S162) and/or control the device (S164).

6. Method according to any of the preceding claims, **characterized in that** the signal comprises an information relating to a device identification, a device type, a device status, and/or a device allocation.

7. Device (10; 10A, 10B), in particular a device for a medical application, configured for use in a wireless network, comprising a transmitter (12) for wirelessly transmitting a signal (20, 22; 20A, 22A, 20B, 22B) related to the device (10; 10A, 10B),
**characterized in that**
the device (10; 10A, 10B) is configured to transmit the signal with more than one transmission power (20, 22; 20A, 22A, 20B, 22B).

8. Device (10) according to claim 7, **characterized in that** the device (10) is configured to transmit the signal with more than two transmission powers (20, 22, 24), preferably with a low, medium, and/or high transmission power, wherein the transmission power is preferably discrete or dynamic, wherein each signal (20, 22, 24) preferably comprises an information relating to the respective transmission power and/or an indication of the respective signal number.

9. Device (10) according to claim 7 or 8, **characterized in that** the device (10) is configured to transmit the signal (20, 22) as a plurality of packets (A₁, ... Aₙ, Aₙ₊₁,...,Aₙ₊ₓ) with a respective transmission power.

10. Device (10) according to any of the claims 7 to 9, **characterized in that** the device (10) comprises a receiver (12) configured to receive an instruction signal (42), wherein the device (10) is furthermore configured to transmit the signal (20, 22, 24) based on the received instruction signal (42), preferably by setting a power transmission modus corresponding to the instruction signal (42), wherein the device (10) is preferably configured to receive data and/or be controlled by an external monitoring unit (40) upon a received pairing signal.

11. Device according to any of the claims 7 to 10, **characterized in that** the signal comprises an information relating to a device identification, a device type, a device status, and/or a device allocation.

12. System for localizing a device (10; 10A, 10B), in particular a device for a medical application, in a wireless network configured for a plurality of devices, comprising:
- at least one device (10; 10A, 10B) according to any of the claims 7 to 11 configured to wirelessly transmit a signal (20, 22; 20A, 22A, 20B, 22B) from the device (10; 10A, 10B);
- at least one receiver (30; 30A, 30B; 30A, 30B, 30C) for receiving a signal (20, 22; 20A, 22A, 20B, 22B) transmitted from a device (10; 10A, 10B); and
- a monitoring unit (40) in communication with the receiver (30; 30A, 30B; 30A, 30B, 30C) configured to evaluate the received signal (20, 22; 20A, 22A, 20B, 22B),
**characterized in that**
the device (10; 10A, 10B) is configured to transmit the signal (20, 22; 20A, 22A, 20B, 22B) with more than one transmission power and wherein the monitoring unit (40) is configured to determine the location of the device (10; 10A, 10B) based on the received signal (20, 22; 20A, 22A, 20B, 22B).

13. System according to claim 12, **characterized in that** the monitoring unit (40) is configured to determine the location of the device (10; 10A, 10B) based on an information relating to the respective transmission power and/or an indication of the respective signal number comprised in the received signal (20, 22; 20A, 22A, 20B, 22B).

14. System according to claim 12 or 13, **characterized in that** the monitoring unit (40) is configured to evaluate the signal (20, 22) comprising a plurality of packets (A₁, ... Aₙ, Aₙ₊₁,..., Aₙ₊ₓ) with a respective transmission power and to determine the location of the device (10) after a predefined amount of packets (A₁, ... Aₙ, Aₙ₊₁,..., Aₙ₊ₓ) have been received by the receiver (30A, 30B, 30C).

15. System according to any of the claims 12 to 14, **characterized in that** the system comprises multiple receivers (30A, 30B; 30A, 30B, 30C) in the wireless network, wherein the monitoring unit (40) is configured to determine the location based on the respective transmission power of the received signals (20, 22; 20, 22, 24; 20A, 22A, 20B, 22B), preferably based on proximity sensing or based on fingerprinting of the received signals (20, 22; 20, 22, 24; 20A, 22A, 20B, 22B).
